# EUROPÄISCHE PATENTANMELDUNG

(11) **EP 4 841 935 A1**
(43) Veröffentlichungstag der Anmeldung: **18.11.2026**
(21) Anmeldenummer: 25176610.1
(22) Anmeldetag: 15.05.2025
(51) Int. Cl.: H04L 9/40, H04L 12/28, H04Q 11/04, H04W 12/63, H04W 12/72

(54) **TECHNIKEN ZUR KOMFORTABLEN AKTIVIERUNG EINES LEITUNGSGEBUNDENEN INTERNETZUGANGS**

(71) Anmelder: Deutsche Telekom AG, 53113 Bonn (DE)
(72) Erfinder: Minow, Jascha, Bensheim (DE); Simon, Peter, Ravensburg (DE)
(74) Vertreter: karo IP

(57) **Zusammenfassung**

Die vorliegende Erfindung betrifft ein Verfahren zur Aktivierung eines leitungsgebundenen Internetzugangs eines Internetanbieters an einem Anschluss durch ein mobiles Endgerät, wobei das Verfahren folgende Schritte umfasst:
• Herstellen einer leitungsgebundenen Verbindung zwischen der Netzwerkzugangseinrichtung und dem Anschluss;
• Herstellen einer lokalen Verbindung zwischen dem mobilen Endgerät und der Netzwerkzugangseinrichtung;
• Bereitstellen von Anmeldevorgangs-Informationen von dem Internetanbieter vermittelt durch die Netzwerkzugangseinrichtung an das mobile Endgerät, wobei die Anmeldevorgangs-Informationen zumindest eine Adresse eines Authentifizierungsdienstes des Internetanbieters sowie eine Anschlusskennung des Anschlusses umfassen;
• Herstellen einer Mobilfunkverbindung zwischen dem mobilen Endgerät und dem Authentifizierungsdienst des Internetanbieters unter Verwendung zumindest einer der Anmeldevorgangs-Informationen;
• Übermittlung, durch das mobile Endgerät, zumindest einer Nutzeridentifikation, die auf der in der SIM-Karte gespeicherten IMSI basiert, an den Authentifizierungsdienst des Internetanbieters und Authentifizierung des Nutzers;
• Validieren einer räumlichen Zuordnung des mobilen Endgeräts zu der Netzwerkzugangseinrichtung durch den Authentifizierungsdienst und Aktivieren des Internetzugangs an dem Anschluss, sofern die Zuordnung erfolgreich bestätigt wurde.

## Beschreibung

Die Erfindung betrifft das technische Gebiet der Telekommunikation und insbesondere Techniken zur Authentifizierung und Aktivierung eines leitungsgebundenen Internetzugangs. Im Mittelpunkt steht dabei die Nutzung eines mobilen Endgeräts mit SIM-Karte zur Identifizierung eines Nutzers und zur Auslösung einer Internetfreischaltung an einem leitungsgebundenen Anschluss.

Beim Einzug in eine neue Wohnung oder bei der Inbetriebnahme eines Internetanschlusses an einem bislang nicht genutzten Anschluss ist es im Stand der Technik erforderlich, dass der Nutzer zunächst einen Anbieter auswählt, einen Vertrag abschließt und einen aufwändigen formalen Aktivierungsprozess durchläuft. Dies gilt selbst dann, wenn der Nutzer bereits einen Mobilfunkvertrag mit demselben Anbieter besitzt, der das Internet bereitstellt.

Typischerweise wird das Endgerät des Nutzers - etwa ein Router oder eine Netzwerkzugangseinrichtung - beim erstmaligen Anschluss an eine sogenannte "Walled Garden"-Zone geleitet, in der aus Sicherheitsgründen für das Netzwerk nur eingeschränkter Netzwerkzugriff besteht. Dort kann der Nutzer über ein Webportal die beispielsweise Auswahl eines Anbieters und den Abschluss eines Internetdienstes vornehmen. Eine automatische Freischaltung erfolgt nicht, und die Aktivierung ist in der Regel nicht unmittelbar wirksam. Auch bei bereits bekannten Geräten (z. B. bei einem Umzug mit bestehendem Router) ist eine erneute Autorisierung erforderlich.

Der damit verbundene Prozess ist aus Nutzersicht aufwendig, zeitverzögert und potenziell fehleranfällig. Ferner kann ein Wechsel zwischen Mobilfunk- und Festnetzdiensten - selbst beim selben Anbieter - bisher nicht ohne erneute Identifizierung durchgeführt werden.

Ein automatischer Übergang zwischen Mobilfunkvertrag und leitungsgebundenem Internetzugang - ohne manuelle Schritte des Nutzers - ist nach dem Stand der Technik nicht vorgesehen.

Der Erfindung liegt daher die Aufgabe zugrunde Techniken anzugeben, die die Nachteile des Standes der der Technik zumindest teilweise überwinden und eine nutzerfreundliche Aktivierung eines leitungsgebundenen Anschlusses ermöglichen, insbesondere ohne, dass der Nutzer einen separaten Authentifizierungs- oder Vertragsabschlussprozess durchlaufen muss.

Die vorliegende Erfindung löst diese Aufgabe durch die Merkmale der unabhängigen Ansprüche.

Gemäß einem ersten Aspekt der Erfindung wird ein Verfahren zur Aktivierung eines leitungsgebundenen Internetzugangs eines Internetanbieters an einem Anschluss durch ein mobiles Endgerät gelehrt, wobei bereitgestellt wird:
- ein mobiles Endgerät, das vermittels einer ihm zugeordneten SIM-Karte mit einem Mobilfunknetz eines Telekommunikationsanbieters verbindbar ist, und eine Netzwerkzugangseinrichtung, die einen Zugang zum Internet vermittelt durch den Anschluss ermöglicht,
   ∘ die SIM-Karte berechtigt also zum Zugang zu dem Mobilfunknetz des Telekommunikationsanbieters;
wobei das Verfahren folgende Schritte umfasst:
- Herstellen einer leitungsgebundenen Verbindung zwischen der Netzwerkzugangseinrichtung und dem Anschluss;
- Herstellen einer lokalen Verbindung zwischen dem mobilen Endgerät und der Netzwerkzugangseinrichtung. Die Netzwerkzugangseinrichtung ist insbesondere ein Router - auch als "CPE" bezeichnet. Bei der lokalen Verbindung kann es sich um eine drahtlose Verbindung, beispielsweise WiFi, NFC, Bluetooth handeln oder aber um eine drahtgebundene Verbindung, beispielsweise mittels USB C Kabel. Gegenüber den anderen drahtlosen Verbindungen hat WiFi den Vorteil, dass typischerweise der Router ohnehin über ein Funkmodul zur Bereitstellung einer WiFi Verbindung verfügt. Zudem können größere Datenmengen über die WiFi Verbindung übertragen werden. Die NFC bzw. die Bluetooth Verbindungen haben den Vorteil, dass diese lokal begrenzt sind und dass somit sichergestellt werden kann, dass nur Nutzer, die sich in der Nähe des Routers befinden die entsprechende Verbindung aufbauen können;
- Bereitstellen von Anmeldevorgangs-Informationen von dem Internetanbieter vermittelt durch die Netzwerkzugangseinrichtung an das mobile Endgerät, wobei die Anmeldevorgangs-Informationen zumindest eine Adresse eines Authentifizierungsdienstes des Internetanbieters sowie eine Anschlusskennung des Anschlusses umfassen; in Kenntnis der Adresse des Authentifizierungsdienstes kann eine entsprechende Anfrage zielgerichtet zu dem Authentifizierungsdienst geroutet werden. Die Anschlusskennung, also eine Anschluss-ID, dient dazu, den Anschluss von anderen zu unterscheiden. Der Internetanbieter weiß hierdurch also, welche Anschluss freigeschaltet werden soll, und hat zudem in seiner Datenbank Kenntnis, an welchem Standort, insbesondere in welcher Wohneinheit, der entsprechende Anschluss zugeordnet und terminiert ist.
- Herstellen einer Mobilfunkverbindung zwischen dem mobilen Endgerät und dem Authentifizierungsdienst des Internetanbieters unter Verwendung zumindest einer der Anmeldevorgangs-Informationen; dies kann in Form einer Authentifizierungsanfrage von dem mobilen Endgerät an den Authentifizierungsdienst realisiert sein. Die Adresse des Authentifizierungsdienstes wird herbei genutzt, um die Anfrage zielgerichtet zu terminieren und die Anschlusskennung kann übermittelt werden, damit der Authentifizierungsdienst den entsprechenden Anschluss zuordnen kann. Falls der Internetanbieter nicht der Telekommunikationsanbieter ist, kann die Verbindung zu dem Authentifizierungsdienst auch mittelbar durch Nutzung der Infrastruktur des Telekommunikationsanbieters realisiert werden. Der Telekommunikationsanbieter kann eine Authentifizierungsanfrage von dem mobilen Endgerät an die entsprechende Adresse des Authentifizierungsdienstes im Internet routen;
- Übermittlung, durch das mobile Endgerät, zumindest einer Nutzeridentifikation, die auf der in der SIM-Karte gespeicherten IMSI basiert, an den Authentifizierungsdienst des Internetanbieters und Authentifizierung des Nutzers. Die nachfolgenden Schritte können insbesondere nur dann vorgenommen werden, wenn die Authentifizierung des Nutzers erfolgreich war, also wenn dessen Nutzeridentifikation dem Authentifizierungsdienst bekannt ist. Wenn die nachfolgenden Schritte nur bei erfolgreicher Identifizierung vorgenommen werden, schont dies Ressourcen;
- Validieren einer räumlichen Zuordnung des mobilen Endgeräts zu der Netzwerkzugangseinrichtung durch den Authentifizierungsdienst und Aktivieren des Internetzugangs an dem Anschluss, sofern die Zuordnung erfolgreich bestätigt wurde. Die räumliche Zuordnung ist dahingehend zu verstehen, dass sichergestellt werden soll, dass nicht irgendein mobiles Endgerät die Aktivierung durchführen kann, sondern nur ein solches mobiles Endgerät, dass sich beispielsweise auch in der entsprechenden Wohneinheit des Anschlusses mit der übermittelten Anschlusskennung befindet. Wird festgestellt, dass die entsprechende räumliche Zuordnung nicht existiert, so wird das Verfahren abgebrochen. In einer Ausführungsform kann dann die Anschlusskennung auch für das vorgenannte Verfahren aus Sicherheitsgründen gesperrt werden, sodass der Nutzer auf die bisherigen Methoden, die schon im Stand der Technik bekannt sind, zurückgreifen muss.

Das Verfahren kann insbesondere exakt in der Reihenfolge der wiedergegebenen Schritte ausgeführt werden.

Wenn der Internetanbieter nicht dem Telekommunikationsanbieter entspricht, kann der Internetanbieter bei dem Telekommunikationsanbieter, dem die SIM-Karte zugeordnet ist, anfragen, damit diese ihm die Identität des Nutzers bestätigt oder mitteilt - hierzu können entsprechende technische Schnittstellen eingerichtet werden, wobei insbesondere sichergestellt sein muss, dass die Kommunikation verschlüsselt stattfindet, um die Daten des Nutzers zu schützen.

Dieses Verfahren ermöglicht die weitgehend automatische und komfortable Aktivierung eines leitungsgebundenen Internetzugangs, ohne dass der Nutzer aufwendige manuelle Eingaben vornehmen muss - eventuell muss der Nutzer noch seinen gewünschten Internetanbieter bei dem Anmeldevorgang aus einer Liste von zur Verfügung stehenden Internetanbietern auswählen. Durch die initiale physische Verbindung der Netzwerkzugangseinrichtung mit dem Anschluss wird ein technisch betriebsbereiter Zustand hergestellt. Gleichzeitig wird eine lokale Verbindung - etwa über WLAN oder USB - zwischen dem mobilen Endgerät des Nutzers und der CPE eingerichtet. Über diese Verbindung erhält das mobile Endgerät Anmeldevorgangs-Informationen, einschließlich eines Links zum Authentifizierungsdienst sowie einer Anschlusskennung.

Das mobile Endgerät nutzt parallel seine Mobilfunkverbindung, um sich beim Authentifizierungsdienst zu melden. Dieser Abgleich erfolgt unter Rückgriff auf die IMSI-basierten Identifikationsdaten der SIM-Karte und ermöglicht eine verlässliche Zuordnung zu einem bestehenden Mobilfunkvertrag - wodurch die Identität des Nutzers bestätigt werden kann. Besonders vorteilhaft ist die räumliche Bindung bzw. Zuordnung zwischen Endgerät und CPE, die als Bedingung für die Aktivierung dient. Hierdurch wird verhindert, dass missbräuchlich aus der Ferne eine Leitung aktiviert wird. Das Verfahren verbindet hohe Automatisierung mit verlässlicher Sicherheit auf Basis etablierter Kommunikations- und Authentifizierungsinfrastrukturen.

Gemäß einer Ausführungsform erfolgt die Validierung der räumlichen Zuordnung des mobilen Endgeräts zu der Netzwerkzugangseinrichtung mittels einer Bestimmung der Standortübereinstimmung des mobilen Endgeräts mit dem Anschluss und/oder durch eine Analyse der Verbindungsart der lokalen Verbindung zwischen dem mobilen Endgerät und der Netzwerkzugangseinrichtung.

Diese Ausführungsform legt zwei technisch unterschiedliche, aber komplementäre Verfahren zur Sicherstellung der räumlichen Nähe zwischen Nutzergerät und Anschluss offen. Zum einen kann die Standortübereinstimmung durch Positionsbestimmung (z. B. GPS, Triangulation) des mobilen Endgeräts überprüft werden, wobei dessen ermittelter Standort mit dem bekannten Anschlussstandort abgeglichen wird dessen Kenntnis der Internetanbieter durch die Anschlusskennung hat. Zum anderen kann durch Analyse der Verbindungsart - etwa ob es sich um eine USB-, Bluetooth- oder WLAN-Verbindung handelt - implizit auf eine physische Nähe geschlossen werden. Die Kombination dieser Verfahren erhöht die Sicherheit gegen sogenannte Spoofing-Angriffe, bei denen etwa Standortdaten manipuliert werden. Besonders vorteilhaft ist der Einsatz der Verbindungsartanalyse in Innenräumen, in denen satellitengestützte Systeme unzuverlässig sein können. Durch die "und/oder"-Struktur lässt sich die Erfindung flexibel an unterschiedliche technische Rahmenbedingungen anpassen und es können synergetische Effekte erzielt werden.

Vorzugsweise erfolgt die Bestimmung der Standortübereinstimmung mittels satellitengestützter Positionsbestimmung des mobilen Endgeräts, insbesondere über GPS oder GLONASS, und/oder mittels Funkzellen-Triangulation des mobilen Endgeräts durch Auswertung von Signalparametern mehrerer Basisstationen.

Diese Ausgestaltung ermöglicht eine geografisch verlässliche Erfassung der Position des mobilen Endgeräts zur räumlichen Validierung. Bei der satellitengestützten Positionsbestimmung (z. B. mittels GPS oder GLONASS) wird der Standort über den Empfang von Satellitensignalen mit einer Genauigkeit von wenigen Metern bestimmt. Ergänzend oder alternativ kann durch Funkzellen-Triangulation die Position des Geräts anhand der Signalstärken und Zeitverzögerungen zu mehreren Mobilfunkbasisstationen ermittelt werden. Letzteres ist insbesondere dann vorteilhaft, wenn keine direkte Satellitenverbindung verfügbar ist, etwa in Gebäuden oder in städtischer Bebauung. Durch die Kombination beider Verfahren kann eine robuste Standortbestimmung auch unter erschwerten Empfangsbedingungen erzielt werden. Die Standortinformation dient dabei als Grundlage für den Vergleich mit der bekannten Position des Anschlusses und damit als sicherheitsrelevantes Element zur Aktivierungsfreigabe. Es ist ein technischer Vorteil der Funkzellen-Triangulationsmethode, dass es prinzipiell möglich ist, dass die entsprechenden Daten alleinig von dem Telekommunikationsanbieter erhoben werden, was die Gefahr einer Fälschung der Daten ausschließt oder zumindest minimiert.

Gemäß einer weiteren Ausführungsform der Erfindung wird, wenn bei der Bestimmung der Standortübereinstimmung ein vorgegebener Schwellenwert für die zulässige Abweichung überschritten wird, zur Verbesserung der Standortbestimmung eine oder mehrere Maßnahmen ergriffen. Zur Verbesserung der satellitengestützten Positionsbestimmung kann eine Nutzung mehrerer globaler Navigationssatellitensysteme (Multi-GNSS), insbesondere GPS, GLONASS, Galileo und/oder BeiDou erfolgen, und/oder es werden mehrere Positionsmessungen über ein Zeitintervall hinweg durchgeführt und durch Interpolation ausgewertet. Zur Verbesserung der Funkzellen-Triangulation kann die Anzahl der berücksichtigten Basisstationen erhöht werden und/oder das Funksignal des mobilen Endgeräts zur besseren Auswertung verstärkt oder über einen längeren Zeitraum ausgesendet werden.

Diese Ausführungsform sorgt dafür, dass bei einer zunächst ungenügenden Positionsgenauigkeit automatisch zusätzliche Maßnahmen zur Verbesserung der Datenqualität angestoßen werden. Die Multi-GNSS-Nutzung erhöht die Satellitenabdeckung und damit die Ortungsgenauigkeit. Die Mehrfachmessung mit Zeitinterpolation gleicht kurzfristige Schwankungen oder Messfehler aus. Für die Funkzellen-Triangulation erhöht sich die Genauigkeit durch die Einbeziehung zusätzlicher Netzpunkte oder durch eine optimierte Signalübertragung. Auf diese Weise wird die Verlässlichkeit der räumlichen Validierung erhöht, ohne den Nutzer aktiv einbeziehen zu müssen, was die Automatisierbarkeit des gesamten Aktivierungsverfahrens unterstützt.

Gemäß einer weiteren Ausführungsform der Erfindung umfasst die Analyse der Verbindungsart der lokalen Verbindung zwischen dem mobilen Endgerät und der Netzwerkzugangseinrichtung eine Bewertung der Übertragungstechnologie, wobei insbesondere eine drahtgebundene Verbindung, eine Bluetooth-Verbindung oder eine Nahfeldkommunikation (NFC) als Nachweis für eine räumliche Nähe des mobilen Endgeräts zur Netzwerkzugangseinrichtung gewertet wird.

Diese Ausführungsform nutzt die physikalischen Eigenschaften bestimmter Kommunikationstechnologien zur impliziten Validierung der räumlichen Nähe zwischen Endgerät und Zugangseinrichtung. Eine drahtgebundene Verbindung wie USB impliziert unmittelbaren physischen Kontakt. Bluetooth und NFC hingegen erlauben zwar drahtlose Verbindungen, funktionieren jedoch nur über sehr kurze Entfernungen, typischerweise wenige Meter beziehungsweise Zentimeter. Durch die Auswertung der verwendeten Verbindungstechnologie kann daher auf die Anwesenheit des Nutzers in unmittelbarer Nähe des Anschlusses geschlossen werden. Dies bietet einen alternativen oder ergänzenden Sicherheitsmechanismus zur geobasierten Standortprüfung, insbesondere in Umgebungen mit gestörtem oder eingeschränktem GPS-Empfang.

Gemäß einer weiteren Ausführungsform der Erfindung umfassen die Anmeldevorgangs-Informationen zusätzlich eine Session-ID und/oder eine auswählbare Internetanbieterkennung.

Diese Erweiterung der Anmeldevorgangs-Informationen dient der eindeutigen Zuordnung und Steuerung des Authentifizierungsprozesses. Die Session-ID ermöglicht es dem System, einzelne Authentifizierungsanfragen voneinander zu unterscheiden und etwa bei Unterbrechungen oder Mehrfachversuchen konsistent weiterzuverarbeiten. Die auswählbare Internetanbieterkennung erlaubt es dem Nutzer, im Rahmen des Walled-Garden-Portals oder einer vergleichbaren Benutzeroberfläche einen spezifischen Internetanbieter auszuwählen, etwa im Fall einer Mehranbieterlösung an einem Anschluss. Dadurch wird das Verfahren sowohl flexibler als auch präziser steuerbar und unterstützt komplexe Netzinfrastrukturen, bei denen mehrere Anbieter auf ein gemeinsames physisches Anschlussnetz zugreifen.

Gemäß einer Ausführungsform entspricht der Internetanbieter dem Telekommunikationsanbieter.

Diese Ausführungsform beschreibt ein technisch vorteilhaftes Szenario, in dem der Anbieter des leitungsgebundenen Internetzugangs identisch ist mit dem Anbieter des Mobilfunknetzes, über das das mobile Endgerät mit der SIM-Karte kommuniziert. Der Vorteil dieser Konstellation liegt in der internen Verfügbarkeit aller relevanten Vertrags-, Identifikations- und Standortdaten innerhalb eines einheitlichen Backend-Systems. Dadurch entfällt die Notwendigkeit eines zwischenanbieterübergreifenden Datenaustauschs zur Authentifizierung, was sowohl die Effizienz als auch die Sicherheit erhöht.

Bevorzugt wird während der Authentifizierung und Validierung eine durchgehende Verbindung des mobilen Endgeräts mit der Netzwerkzugangseinrichtung aufrechterhalten, und ein Abbruch dieser Verbindung dient als Kriterium zur Unterbrechung des Verfahrens.

Diese Maßnahme stellt sicher, dass sich das mobile Endgerät während des gesamten Authentifizierungs- und Validierungsprozesses tatsächlich in der Nähe der Netzwerkzugangseinrichtung befindet. Die fortlaufende Verbindung - beispielsweise über WLAN oder eine andere lokale Kommunikationsart - wird dabei als Echtheitsbeweis für die physische Anwesenheit des Endgeräts am vorgesehenen Anschlussort verwendet. Ein Abbruch der Verbindung, etwa durch Entfernung des Geräts oder gezielte Manipulation, führt zum sofortigen Abbruch des Aktivierungsprozesses. Dieses Merkmal erhöht die Sicherheit des Verfahrens deutlich, da es gezielt gegen Spoofing und Fernsteuerungsszenarien schützt, in denen eine tatsächliche Anwesenheit des Nutzers vorgetäuscht wird.

Gemäß einer weiteren Ausführungsform der Erfindung gilt die räumliche Zuordnung als gültig, wenn die ermittelte Position des mobilen Endgeräts von der Position des Anschlusses maximal um einen festlegbaren vorgegebenen Abstand abweicht, insbesondere um nicht mehr als 50 Meter, insbesondere nicht mehr als 25 Meter. Wobei die Schwelle in Abhängigkeit von dem Fehler der Positionsbestimmung dynamisch festlegbar ist. Beispielsweise kann der Fehler der Positionsbestimmung mit einem Faktor, z.B. 5, multipliziert werden, um den festlegbaren vorgegebenen Abstand festzulegen. Also z.B. ist der Fehler der Positionsbestimmung 10 Meter folgt als vorgegebener Abstand 50 Meter.

Diese Ausgestaltung definiert einen konkreten Toleranzbereich zur Entscheidung, ob das mobile Endgerät als räumlich zugehörig zur Netzwerkzugangseinrichtung betrachtet werden kann. Die Festlegung eines Schwellenwerts, insbesondere im Bereich weniger Dutzend Meter, erlaubt es dem System, technisch unvermeidbare Standortabweichungen - etwa durch Messfehler bei GPS oder Triangulation - zu berücksichtigen, ohne die Funktionalität zu beeinträchtigen. Gleichzeitig stellt der Schwellenwert sicher, dass eine ausreichende örtliche Nähe gegeben ist, um eine missbräuchliche Fernaktivierung auszuschließen. Die Möglichkeit zur Parametrierung des Abstands erhöht die Flexibilität des Systems, beispielsweise für unterschiedliche Gebäudetypen oder Empfangsbedingungen.

Gemäß einer Ausführungsform wird zur Authentifizierung des Nutzers die auf der SIM-Karte gespeicherte IMSI an den Authentifizierungsdienst übermittelt. Bevorzugt wird die IMSI verschlüsselt übermittelt, insbesondere unter Verwendung eines öffentlichen Schlüssels, der auf der SIM-Karte gespeichert ist.

Diese Ausführungsform verbessert den Schutz der besonders sensiblen IMSI-Daten, die andernfalls im Klartext übertragen würden. Durch die Verschlüsselung mit einem öffentlichen Schlüssel, der direkt auf der SIM-Karte hinterlegt ist, wird sichergestellt, dass die IMSI nur vom berechtigten Authentifizierungsdienst entschlüsselt und ausgewertet werden kann. Die Verwendung asymmetrischer Kryptografie verhindert dabei effektiv das Abfangen oder Manipulieren der Identifikationsdaten durch Dritte. Der Einsatz solcher sicherheitsoptimierter Übertragungsverfahren ist insbesondere in Mobilfunkinfrastrukturen bewährt und lässt sich nahtlos in das erfindungsgemäße System integrieren, ohne die Nutzerfreundlichkeit zu beeinträchtigen. Es muss also nicht extra eine Verschlüsselungsroutine zwischen dem Internetanbieter und dem mobilen Endgerät aufgesetzt werden, sondern es wird schon der bereits vorhandener Verschlüsselungsmechanismus zwischen dem mobilen Endgerät und dem Telekommunikationsanbieter verwendet.

Gemäß einer weiteren Ausführungsform der Erfindung werden für die Standortübereinstimmung nur solche Standortdaten berücksichtigt, die innerhalb eines festlegbaren Zeitfensters vor dem Zeitpunkt der Authentifizierung ermittelt wurden, wobei das Zeitfenster insbesondere 15 Minuten beträgt.

Diese Maßnahme stellt sicher, dass bei der Bewertung der räumlichen Nähe zur Netzwerkzugangseinrichtung nur aktuelle und damit verlässliche Standortdaten herangezogen werden. Ein veralteter Standort, etwa aus einer früheren GPS-Erfassung, könnte sonst zu einer unzutreffenden Aktivierung führen oder durch Spoofing missbraucht werden. Durch das zeitliche Eingrenzen auf beispielsweise 15 Minuten wird gewährleistet, dass das mobile Endgerät zur Zeit der Authentifizierungsanfrage tatsächlich in räumlicher Nähe zum Anschluss lokalisiert wurde. Gleichzeitig bleibt das Verfahren robust gegenüber kurzzeitigen Verzögerungen in der Datenverarbeitung, etwa bei schwacher Verbindung oder langsamer Positionsbestimmung.

In einer vorteilhaften Ausführungsform werden die Anmeldevorgangs-Informationen in einem gesicherten Netzwerkbereich, insbesondere einem sogenannten Walled Garden, bereitgestellt.

Diese Ausgestaltung nutzt ein bewährtes Netzwerkkonzept zur Steuerung und Absicherung des Zugriffs während der initialen Verbindungsphase. Im sogenannten Walled Garden befindet sich das mobile Endgerät in einem logisch begrenzten Bereich des Netzwerks, in dem nur bestimmte Inhalte oder Dienste - hier insbesondere die Anmeldeseite und zugehörige Authentifizierungsdienste - erreichbar sind. Der Vorteil liegt darin, dass das Gerät zwar bereits mit der Netzwerkzugangseinrichtung verbunden ist, aber noch keinen offenen Internetzugang erhält. Dadurch wird verhindert, dass unautorisierte oder unbeabsichtigte Kommunikation mit externen Servern stattfindet, und gleichzeitig eine kontrollierte Benutzerführung innerhalb des Aktivierungsprozesses ermöglicht.

Gemäß einer weiteren Ausführungsform der Erfindung umfasst der Authentifizierungsdienst eine Funktionseinheit zur Verarbeitung von SIM-basierten Identifikationsdaten "FLASS" und eine Kundenverwaltungsinstanz "Customer Relationship Management System 'CRM'", oder der Authentifizierungsdienst interagiert funktional mit diesen.

Diese Ausgestaltung beschreibt eine modulare oder kooperative Systemarchitektur, bei der spezialisierte Einheiten unterschiedliche Aufgaben innerhalb des Authentifizierungsprozesses übernehmen. Die Funktionseinheit FLASS verarbeitet Informationen, die direkt aus der SIM-Karte des mobilen Endgeräts stammen, insbesondere die IMSI oder daraus abgeleitete Nutzerkennungen. Die CRM-Einheit hingegen dient der Verwaltung von Vertragsbeziehungen, etwa zur Prüfung, ob der Nutzer zur Aktivierung eines Anschlusses berechtigt ist. Durch die Trennung dieser Aufgabenbereiche kann das System flexibel skaliert und auf unterschiedliche Anbieter- oder Netzwerkinfrastrukturen angepasst werden. Gleichzeitig wird der Schutz sensibler Daten durch klare funktionale Schnittstellen verbessert.

Gemäß einem zweiten Aspekt der Erfindung wird eine Netzwerkzugangseinrichtung zur Aktivierung eines leitungsgebundenen Internetzugangs an einem Anschluss bereitgestellt, wobei die Netzwerkzugangseinrichtung eingerichtet ist, eine leitungsgebundene Verbindung mit einem Anschluss herzustellen, ein lokales Netzwerk für die Verbindung mit einem mobilen Endgerät bereitzustellen, Anmeldevorgangs-Informationen von einem Internetanbieter über das lokale Netzwerk an das mobile Endgerät weiterzuleiten und eine Kommunikation zwischen dem mobilen Endgerät und einem Authentifizierungsdienst des Internetanbieters durchzulassen, wobei die Netzwerkzugangseinrichtung dafür vorgesehen ist, während des Authentifizierungs- und Validierungsvorgangs mit dem mobilen Endgerät verbunden zu bleiben.

Die gelehrte Netzwerkzugangseinrichtung - typischerweise als CPE, also Customer Premises Equipment, ausgeführt - bildet die zentrale physische Schnittstelle zwischen dem Anschluss des Internetanbieters und dem Endgerät des Nutzers. Sie ist nicht nur für den Netzanschluss verantwortlich, sondern übernimmt auch aktive Rollen im Authentifizierungsprozess: Sie stellt ein lokales Netzwerk zur Verfügung (z. B. WLAN), leitet gezielt Anmeldevorgangs-Informationen an mobile Geräte weiter und kontrolliert, ob die Verbindung während des gesamten Verfahrens aufrechterhalten bleibt. Dadurch wird die CPE zu einem aktiven Sicherheitselement und Teil der Authentifizierungsinfrastruktur. Das Gerät erfüllt somit nicht nur eine netztechnische Funktion, sondern auch eine verfahrenstechnische Rolle im Identitätsnachweis und der Zugangssteuerung.

Gemäß einem weiteren Aspekt der Erfindung wird ein System zur Aktivierung eines leitungsgebundenen Internetzugangs eines Internetanbieters an einem Anschluss bereitgestellt, das System ist eingerichtet zur Ausführung des vorstehend beschrieben Verfahrens. Insbesondere aufweisend eine Netzwerkzugangseinrichtung, ein mobiles Endgerät mit einer ihm zugeordneten SIM-Karte, das mit einem Mobilfunknetz verbindbar ist, sowie einen Authentifizierungsdienst, der eine Nutzeridentifikation auf Basis der SIM-Kartendaten verarbeitet und eine räumliche Zuordnung des mobilen Endgeräts zu der Netzwerkzugangseinrichtung validiert, wobei das System ausgelegt ist, auf Grundlage der erfolgreichen Validierung durch den Authentifizierungsdienst den Internetzugang am Anschluss zu aktivieren.

Dieses System umfasst sämtliche Komponenten, die zur Durchführung des Verfahrens erforderlich sind, und beschreibt ihre funktionale Zusammenarbeit. Die Netzwerkzugangseinrichtung stellt den Zugang zum leitungsgebundenen Netz sowie die lokale Schnittstelle zum mobilen Endgerät bereit. Das mobile Endgerät dient als personalisierter Authentifizierungs-Token, indem es seine Identität mittels SIM-Karte nachweist und Standort- bzw. Verbindungsinformationen bereitstellt. Der Authentifizierungsdienst prüft die Nutzerdaten und die räumliche Nähe zum Anschluss, bevor der Internetzugang freigegeben wird. Durch die Kombination dieser Elemente in einem Gesamtsystem wird eine besonders effiziente, automatisierte und sichere Lösung für die netzseitige Selbstaktivierung von Internetanschlüssen geschaffen.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitende Figur erläutert:

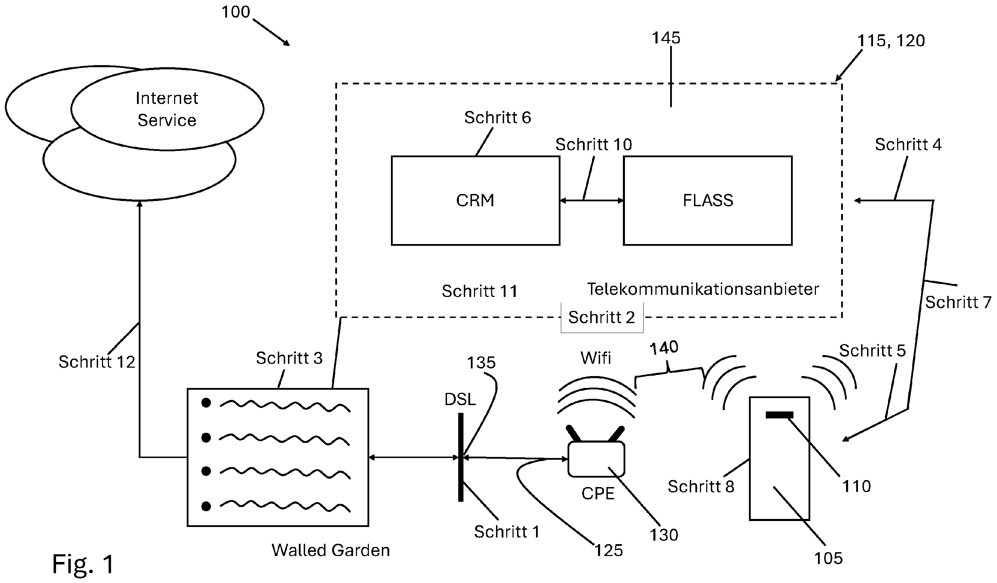

- Fig. 1:: illustriert das erfindungsgemäße System und das erfindungsgemäße Verfahren;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Fig. 1 zeigt ein System 100 zur Aktivierung eines leitungsgebundenen Internetzugangs 125 eines Internetanbieters 115 an einem Anschluss 135 durch ein mobiles Endgerät 105, das mit einer SIM-Karte 110 ausgestattet ist. Das mobile Endgerät 105 kann ein Smartphone 105, ein Tablet 105, ein Notebook 105 oder ein ähnliches Gerät sein.

Das System 100 umfasst eine Netzwerkzugangseinrichtung 130, die lokal bei einem Nutzer vorgesehen ist und über den Anschluss 135 mit dem Netz des Internetanbieters 115 verbunden ist. Die Netzwerkzugangseinrichtung 130 wird beispielsweise als Router 130 oder als CPE 130 (Customer Premises Equipment) ausgeführt und ist dazu eingerichtet, über eine leitungsgebundene Verbindung (z. B. DSL) mit dem Netz synchronisiert zu werden (Schritt 1). Da zum Zeitpunkt der Inbetriebnahme noch keine Authentifizierung erfolgt ist und kein aktives Festnetz-Abonnement vorliegt, wird die Netzwerkzugangseinrichtung 130 durch den Internetanbieter 115 in einen beschränkten Zugriffsbereich, den sogenannten Walled Garden, geleitet.

Parallel zur physischen Anbindung stellt die Netzwerkzugangseinrichtung 130 ein lokales Netzwerk 140 bereit, typischerweise über WLAN oder vergleichbare Funktechnologie. Über diese lokale Verbindung 140 verbindet sich in Schritt 2 das mobile Endgerät 105 mit aktivierter SIM-Karte 110 mit dem lokalen Netzwerk der Netzwerkzugangseinrichtung 130.

Sobald eine Verbindung zum Internet aufgebaut werden soll, wird im Schritt 3 auf dem mobilen Endgerät 105 automatisch eine vom Walled Garden bereitgestellte Portalseite geöffnet. Diese Portalseite enthält eine Benutzeroberfläche zur Auswahl eines Internetanbieters 115 sowie eine Option zur unmittelbaren Authentifizierung über das mobile Endgerät 105.

Wählt der Nutzer die Option zur automatisierten Authentifizierung, wird in Schritt 4 über die Mobilfunkverbindung des mobilen Endgeräts 105 eine Verbindung zu einem Authentifizierungsdienst 145 des Telekommunikationsanbieters 120 aufgebaut. Der Authentifizierungsdienst 145 ist in dieser Ausführungsform als Fixed Line Authentication SIM Service (FLASS) implementiert und dient der Verarbeitung von SIM-basierten Authentifizierungsdaten.

Im nächsten Schritt 5 identifiziert sich das mobile Endgerät 105 gegenüber dem Authentifizierungsdienst 145 unter Verwendung seiner auf der SIM-Karte 110 gespeicherten IMSI. Diese Identifikation berechtigt den Authentifizierungsdienst 145, auf Vertrags- und Kundendaten im Customer Relationship Management (CRM)-System des Internetanbieters 115 zuzugreifen. Voraussetzung dafür ist, dass der Internetanbieter 115 und der Telekommunikationsanbieter 120 entweder identisch sind oder die Daten über entsprechende Schnittstellen austauschen können.

Im Anschluss daran fordert das CRM-System in Schritt 6 über eine interne Schnittstelle den Authentifizierungsdienst 145 dazu auf, vom mobilen Endgerät 105 weitere Informationen zur Identifikation des Anschlusses 135 und zur Bestimmung des aktuellen Standorts des Nutzers einzuholen.

Der Authentifizierungsdienst 145 sendet daher in Schritt 7 eine entsprechende Anforderung an das mobile Endgerät 105, mit der Aufforderung, sowohl die aktuelle Geoposition (z. B. per GPS oder Funkzellen-Triangulation) als auch die sogenannte Line ID des anzuschließenden Anschlusses 135 zu ermitteln.

In Schritt 8 ermittelt das mobile Endgerät 105 die Anschlusskennung - auch als Line ID bezeichnet - über eine Programmschnittstelle (API) der im Walled Garden bereitgestellten Portalseite. Parallel dazu wird die Standortbestimmung durchgeführt, entweder mittels eingebautem GPS-/GLONASS-Empfänger oder auf Basis der Mobilfunknetzstruktur durch Triangulation mehrerer Basisstationen oder auf Basis der Anschlussart.

Diese beiden Parameter - Line ID und Geoposition - werden in Schritt 9 vom mobilen Endgerät 105 über die bestehende Mobilfunkverbindung an den Authentifizierungsdienst 145 übermittelt.

In Schritt 10 leitet der Authentifizierungsdienst 145 die empfangenen Daten an das CRM-System des Internetanbieters 115 weiter. Im CRM-System erfolgt in Schritt 11 eine Validierung der erhaltenen Informationen. Dabei wird insbesondere überprüft, ob die übermittelte Geoposition mit dem physikalischen Standort des Anschlusses 135 übereinstimmt. Ist dies der Fall, und liegt gleichzeitig eine vertraglich gültige Mobilfunknutzung gemäß der IMSI vor, erfolgt die Freigabe und Aktivierung des leitungsgebundenen Internetzugangs 125 für diesen Anschluss 135.

Nach erfolgreicher Aktivierung kann in Schritt 12 das mobile Endgerät 105 sowie gegebenenfalls weitere Endgeräte über die Netzwerkzugangseinrichtung 130 auf das Internet zugreifen.

In einer bevorzugten Ausführungsform erfolgt die Authentifizierung unter Verwendung eines kryptographisch gesicherten Verfahrens, ohne dass sicherheitskritische SIM-Daten - wie beispielsweise die IMSI - direkt vom mobilen Endgerät 105 preisgegeben werden müssen. Hierzu sendet der Authentifizierungsdienst 145, insbesondere der Fixed Line Authentication SIM Service (FLASS), im Rahmen des Authentifizierungsvorgangs eine eindeutige Zeichenfolge (Nonce) an das mobile Endgerät 105. Die Nonce wird von einer auf der SIM-Karte 110 des mobilen Endgeräts 105 gespeicherten Applikation digital signiert und anschließend an den Authentifizierungsdienst 145 zurückübermittelt. Durch die Prüfung der Signatur kann der Authentifizierungsdienst 145 die Authentizität und Besitzberechtigung der SIM-Karte 110 verifizieren, ohne dass die IMSI oder andere sensible Identifikationsmerkmale im Klartext übertragen werden müssen. Dies erhöht die Sicherheit des Verfahrens und schützt die persönlichen Nutzerdaten vor unbefugtem Zugriff.

Ausführungsbeispiel zur standortbasierten Aktivierung mittels Mobilfunktriangulation:
In einer weiteren Ausführungsform der Erfindung wird der Standort des mobilen Endgeräts 105 zur räumlichen Verifikation unter Verwendung von Mobilfunktriangulation bestimmt. Diese Ausführung eignet sich insbesondere für städtische Umgebungen oder Innenbereiche, in denen satellitengestützte Verfahren (z. B. GPS) unzuverlässig oder nicht verfügbar sind.

Das mobile Endgerät 105 kommuniziert hierzu mit mehreren umliegenden MobilfunkBasisstationen, deren geografische Positionen bekannt sind. Das Mobilfunknetz ermittelt

Signalparameter wie Signalstärke oder Signallaufzeit (Round-Trip Time) für jede Basisstation. Aus den gemessenen Parametern wird die Entfernung zwischen dem mobilen Endgerät 105 und den jeweiligen Basisstationen berechnet.

In einem beispielhaften Szenario befinden sich drei Basisstationen A, B und C an den folgenden Positionen:
- Basisstation A: Koordinaten (50.000, 8.000), Entfernung zum mobilen Endgerät 105: 500 m
- Basisstation B: Koordinaten (50.005, 8.005), Entfernung: 700 m
- Basisstation C: Koordinaten (50.002, 8.010), Entfernung: 600 m

Um jede dieser Stationen wird ein Kreis mit dem berechneten Radius konstruiert. Die ermittelte Position des mobilen Endgeräts 105 ergibt sich aus der Schnittmenge dieser drei Kreise, gemäß der Methodik der Trilateration. Die Schnittmenge repräsentiert die ungefähre Position des mobilen Endgeräts. Die Genauigkeit dieser Position liegt typischerweise bei 10 bis 50 Metern, abhängig von der Dichte der Basisstationen und Umgebungsbedingungen.

Zur Sicherstellung der technischen Authentizität und Richtigkeit der Standortverifikation wird die durch Triangulation ermittelte Position mit dem dem Anschluss 135 zugeordneten Standort verglichen. Die räumliche Verifikation gilt als erfolgreich, wenn die Abweichung zwischen beiden Positionen eine maximale Toleranz von 50 Metern nicht überschreitet.

Darüber hinaus ist vorgesehen, dass während des gesamten Prüf- und Übertragungsprozesses eine kontinuierliche lokale Verbindung 140 zwischen dem mobilen Endgerät 105 und der Netzwerkzugangseinrichtung 130 über WLAN aufrechterhalten wird. Ein Verbindungsabbruch während der Standortverifikation führt zum Abbruch des gesamten Aktivierungsvorgangs. Diese Kombination aus netzseitiger Triangulation und kontrollierter physischer Nähe durch eine WLAN-Verbindung stellt eine zusätzliche Schutzschicht gegen Ortungsspoofing dar und wird als neuartig angesehen.

Optional kann zur weiteren Absicherung gegen Manipulationsversuche die zuletzt bekannte GPS-Position des mobilen Endgeräts 105 vor Betreten des Gebäudes oder der Wohnung übermittelt und in den Verifikationsprozess einbezogen werden. Diese historische Positionsinformation dient zur Plausibilitätsprüfung und kann helfen, ungewöhnliche Bewegungsmuster oder Unstimmigkeiten in der Lokationslogik zu identifizieren.

Die Mobilfunktriangulation stellt somit ein bewährtes und technisch nachvollziehbares Verfahren zur Positionsbestimmung dar, das insbesondere in Kombination mit WLAN-Kopplung und optionaler GPS-Historie ein hohes Maß an Genauigkeit und Sicherheit im Rahmen des erfindungsgemäßen Aktivierungsverfahrens bietet.

### Bezugszeichenliste

- 100: System
- 105: mobiles Endgerät
- 110: Sim-Karte
- 115: Internetanbieter
- 120: Telekommunikationsanbieter
- 125: leitungsgebundener Internetzugang
- 130: Netzwerkzugangseinrichtung
- 135: Anschluss
- 140: lokale Verbindung
- 145: Authentifizierungsdienst

## Patentansprüche

1. Verfahren zur Aktivierung eines leitungsgebundenen Internetzugangs (125) eines Internetanbieters (115) an einem Anschluss (135) durch ein mobiles Endgerät (105), wobei bereitgestellt wird:
• ein mobiles Endgerät (105), das vermittels einer ihm zugeordneten SIM-Karte (110) mit einem Mobilfunknetz eines Telekommunikationsanbieters (120) verbindbar ist, und
• eine Netzwerkzugangseinrichtung (130), die einen Zugang zum Internet vermittelt durch den Anschluss (135) ermöglicht,
wobei das Verfahren folgende Schritte umfasst:
• Herstellen einer leitungsgebundenen Verbindung zwischen der Netzwerkzugangseinrichtung (130) und dem Anschluss (135);
• Herstellen einer lokalen Verbindung (140) zwischen dem mobilen Endgerät (105) und der Netzwerkzugangseinrichtung (130);
• Bereitstellen von Anmeldevorgangs-Informationen von dem Internetanbieter (115) vermittelt durch die Netzwerkzugangseinrichtung (130) an das mobile Endgerät (105), wobei die Anmeldevorgangs-Informationen zumindest eine Adresse eines Authentifizierungsdienstes (145) des Internetanbieters (115) sowie eine Anschlusskennung des Anschlusses (135) umfassen;
• Herstellen einer Mobilfunkverbindung zwischen dem mobilen Endgerät (105) und dem Authentifizierungsdienst (145) des Internetanbieters (115) unter Verwendung zumindest einer der Anmeldevorgangs-Informationen;
• Übermittlung zumindest einer Nutzeridentifikation durch das mobile Endgerät (105) an den Authentifizierungsdienst (145) des Internetanbieters (115) und Authentifizierung des Nutzers, wobei die Nutzeridentifikation auf der in der SIM-Karte (110) gespeicherten IMSI basiert;
• Validieren einer räumlichen Zuordnung des mobilen Endgeräts (105) zu der Netzwerkzugangseinrichtung (130) durch den Authentifizierungsdienst (145) und Aktivieren des Internetzugangs (125) an dem Anschluss (135), sofern die Zuordnung erfolgreich bestätigt wurde.

2. Verfahren nach Anspruch 1, wobei die Validierung der räumlichen Zuordnung des mobilen Endgeräts (105) zu der Netzwerkzugangseinrichtung (130) mittels einer Bestimmung der Standortübereinstimmung des mobilen Endgeräts (105) mit dem Anschluss (135) oder durch eine Analyse der Verbindungsart der lokalen Verbindung (140) zwischen dem mobilen Endgerät (105) und der Netzwerkzugangseinrichtung (130) erfolgt.

3. Verfahren nach Anspruch 2, wobei die Bestimmung der Standortübereinstimmung mittels satellitengestützter Positionsbestimmung des mobilen Endgeräts (105) oder mittels Funkzellen-Triangulation des mobilen Endgeräts (105) durch Auswertung von Signalparametern mehrerer Basisstationen erfolgt.

4. Verfahren nach Anspruch 3, wobei bei Überschreiten eines vorgegebenen Schwellenwerts für die zulässige Abweichung bei der Standortübereinstimmung:
• zur Verbesserung der satellitengestützten Positionsbestimmung
- eine Nutzung mehrerer globaler Navigationssatellitensysteme erfolgt
- und/oder mehrere Positionsmessungen über ein Zeitintervall durchgeführt und durch Interpolation ausgewertet werden; oder
• zur Verbesserung der Funkzellen-Triangulation
- eine Anzahl der berücksichtigten Basisstationen erhöht wird
- oder das Funksignal des mobilen Endgeräts (105) zur besseren Auswertung verstärkt oder über einen längeren Zeitraum ausgesendet wird.

5. Verfahren nach Anspruch 2, wobei die Analyse der Verbindungsart der lokalen Verbindung (140) zwischen dem mobilen Endgerät (105) und der Netzwerkzugangseinrichtung (130) eine Bewertung der Übertragungstechnologie umfasst, wobei insbesondere eine drahtgebundene Verbindung, eine Bluetooth-Verbindung oder eine Nahfeldkommunikation (NFC) als Nachweis für eine räumliche Nähe des mobilen Endgeräts (105) zur Netzwerkzugangseinrichtung (130) gewertet wird.

6. Verfahren nach einem der vorhergehenden Ansprüche, wobei die Anmeldevorgangs-Informationen zusätzlich eine Session-ID und/oder eine auswählbare Internetanbieterkennung umfassen.

7. Verfahren nach einem der vorhergehenden Ansprüche, wobei der Internetanbieter (115) dem Telekommunikationsanbieter (120) entspricht.

8. Verfahren nach einem der vorhergehenden Ansprüche, wobei während der Authentifizierung und Validierung eine durchgehende Verbindung des mobilen Endgeräts (105) mit der Netzwerkzugangseinrichtung (130) aufrechterhalten wird und ein Abbruch dieser Verbindung als Kriterium zur Unterbrechung des Verfahrens dient.

9. Verfahren nach einem der vorhergehenden Ansprüche, wobei die räumliche Zuordnung als gültig gilt, wenn die ermittelte Position des mobilen Endgeräts (105) von der Position des Anschlusses (135) maximal um einen festlegbaren vorgegebenen Abstand abweicht.

10. Verfahren nach einem der vorhergehenden Ansprüche, wobei zur Authentifizierung des Nutzers die auf der SIM-Karte (110) gespeicherte IMSI verschlüsselt an den Authentifizierungsdienst (145) übermittelt wird.

11. Verfahren nach einem der Ansprüche 2 bis 10, wobei für die Bestimmung der Standortübereinstimmung nur solche Standortdaten berücksichtigt werden, die innerhalb eines festlegbaren Zeitfensters vor dem Zeitpunkt der Authentifizierung ermittelt wurden.

12. Verfahren nach einem der vorhergehenden Ansprüche, wobei die Anmeldevorgangs-Informationen in einem gesicherten Netzwerkbereich, insbesondere einem sogenannten Walled Garden, bereitgestellt werden.

13. Verfahren nach einem der vorhergehenden Ansprüche, wobei der Authentifizierungsdienst (145) eine Funktionseinheit zur Verarbeitung von SIM-basierten Identifikationsdaten "FLASS" und eine Kundenverwaltungsinstanz "CRM" umfasst oder mit diesen kooperiert.

14. Netzwerkzugangseinrichtung (130) zur Aktivierung eines leitungsgebundenen Internetzugangs (125) an einem Anschluss (135), wobei die Netzwerkzugangseinrichtung (130) eingerichtet ist:
• eine leitungsgebundene Verbindung mit einem Anschluss (135) herzustellen,
• ein lokales Netzwerk für die Verbindung mit einem mobilen Endgerät (105) bereitzustellen,
• Anmeldevorgangs-Informationen von einem Internetanbieter (115) über das lokale Netzwerk an das mobile Endgerät (105) weiterzuleiten
• und eine Kommunikation zwischen dem mobilen Endgerät (105) und einem Authentifizierungsdienst (145) des Internetanbieters (115) durchzulassen, wobei die Netzwerkzugangseinrichtung (130) dafür vorgesehen ist, während des Authentifizierungs- und Validierungsvorgangs mit dem mobilen Endgerät (105) verbunden zu bleiben.

15. System (100) zur Aktivierung eines leitungsgebundenen Internetzugangs (125) eines Internetanbieters (115) an einem Anschluss (135), wobei das System (100) eingerichtet ist zur Ausführung der Schritte des Verfahrens gemäß einem der Ansprüche 1 bis 13.
